# EUROPÄISCHE PATENTSCHRIFT

(11) **EP 2 768 701 B1**
(45) Veröffentlichungstag und Bekanntmachung des Hinweises auf die Patenterteilung: **13.02.2019**
(21) Anmeldenummer: 12780647.9
(22) Anmeldetag: 11.10.2012
(51) Int. Cl.: B60R 11/04

(54) **OPTISCHE VORRICHTUNG FÜR EIN FAHRZEUG**
OPTICAL DEVICE FOR A VEHICLE
DISPOSITIF OPTIQUE POUR UN VÉHICULE

(30) Priorität: 20.10.2011 DE 102011116388
(43) Veröffentlichungstag der Anmeldung: 27.08.2014
(73) Patentinhaber: Continental Automotive GmbH, 30165 Hannover (DE)
(72) Erfinder: TOMESCU, Victor, R-310019 Arad (RO)
(74) Vertreter: Bobbert, Christiana
(86) Internationale Anmeldenummer: PCT/DE2012/100318
(87) Internationale Veröffentlichungsnummer: WO 2013/056700

(56) Entgegenhaltungen:
- EP-A1- 2 372 427
- EP-A2- 2 022 676
- WO-A1-2009/127720
- DE-A1- 10 237 606
- DE-A1-102010 003 955

## Beschreibung

Die Erfindung betrifft eine optische Vorrichtung für ein Fahrzeug gemäß dem Oberbegriff des Patentanspruchs 1, die bevorzugt im Fahrzeuginnenraum hinter einer Windschutzscheibe angeordnet ist. Ferner betrifft die Erfindung eine Kamera mit einer erfindungsgemäßen optischen Vorrichtung sowie ein Fahrzeug mit einer solchen Kamera.

Fahrerassistenzsysteme in Fahrzeugen verwenden häufig eine optische Vorrichtung zur Erfassung der Fahrzeugumgebung, beispielsweise in Form einer Kamera zur Erkennung verschiedenster Objekte im Umfeld des Fahrzeugs.

Die Kamera ist dabei in der Regel hinter der Windschutzscheibe des Fahrzeugs angeordnet und blickt in Fahrtrichtung durch diese hindurch. Beispiele hierfür sind Fahrzeugkameras zur Erkennung von Objekten, Hindernissen und Fahrbahnmarkierungen, Nachtsichtkameras oder Stereokameras als optische Abstandssensoren.

Fahrzeugkameras umfassen in der Regel ein Objektiv und einen senkrecht zur optischen Achse des Objektivs angeordneten lichtempfindlichen Bildsensor. Die optische Achse des Objektivs ist dabei im Wesentlichen horizontal ausgerichtet, um mit der Kamera einen entsprechenden Bereich vor dem Fahrzeug erfassen zu können.

Um das Sichtfeld des Fahrers bei der Anordnung von Kameras hinter der Windschutzscheibe nicht zu stark einzuschränken und um den im Fahrzeug nur begrenzt vorhandenen Bauraum zu sparen, insbesondere bei Anordnung weiterer Sensorsysteme hinter der Windschutzscheibe, müssen Fahrzeugkameras immer kompakter und platzsparender ausgebildet und im Fahrzeug angeordnet werden.

Die DE 102 37 606 B4 versucht dieser Anforderung gerecht zu werden, indem der Bauraum unterhalb der optischen Achse des Objektivs genutzt wird, um dort die für die Bildauswertung benötigte Bildauswerteelektronik auszuordnen. Hierzu schlägt die DE 102 37 606 B4 vor, eine erste Leiterplatte mit darauf befindlichem Bildsensor hinter dem Objektiv sowie senkrecht zu dessen optische Achse anzuordnen und eine zweite Leiterplatte mit der Bildauswerteelektronik unterhalb der sowie im Wesentlichen waagerecht zur optischen Achse des Objektivs anzuordnen. Ein wesentlicher Nachteil bei der vorgeschlagenen Anordnung ist jedoch, dass weiterhin Bauraum hinter dem Objektiv für die Anordnung des Bildsensors benötigt wird und die Bildauswerteelektronik auf einer separaten Leiterplatte angeordnet ist. Dies ist aufwendig und entsprechend teuer.

Die gattungsbildende EP 2 022 676 A2 schlägt dagegen eine Anordnung vor, bei welcher die Leiterplatte, auf der ein Bildsensor zur Erfassung von elektromagnetischer Strahlung angeordnet ist, parallel zur Windschutzscheibe des Fahrzeugs angeordnet ist. Die optische Achse des auf der Leiterplatte angeordneten Bildsensors steht senkrecht zur Ebene der Leiterplatte, wobei neben einer optischen Linse auch ein Spiegel im Bereich der optischen Achse angeordnet ist. Dieser Spiegel ist dabei so ausgerichtet, dass die Richtung der optischen Achse aus der zur Leiterplatte senkrechten Richtung in eine vorwärts gerichtete Richtung geändert wird und dadurch das vor dem Fahrzeug liegenden Sichtfeld auf den Bildsensor abgebildet wird.

Der Erfindung liegt die Aufgabe zugrunde, eine optische Vorrichtung für ein Fahrzeug anzugeben, die möglichst platzsparend und kompakt ausgestaltet ist.

Diese Aufgabe wird durch eine optische Vorrichtung mit den Merkmalen nach Anspruch 1 und durch eine Kamera mit den Merkmalen nach Anspruch 5 gelöst. Vorteilhafte Ausgestaltungen und Weiterbildungen sind Gegenstand von Unteransprüchen, wobei auch Kombinationen und Weiterbildungen einzelner Merkmale miteinander denkbar sind.

Ein wesentlicher Gedanke der Erfindung besteht darin, eine optische Vorrichtung mit einem optischen Modul, welches ein Objektiv bzw. ein Abbildungssystem und einen Bildsensor bzw. ein Bildaufnahmeelement umfasst, sowie mit einer Leiterplatte, auf welcher Bildauswerteelektronik angeordnet ist, vorzugsweise derart auszugestalten, wobei die Leiterplatte mit einer Aussparung bzw. mit einem Loch ausgebildet ist, durch welches das optische Modul hindurch blickt. Die Leiterplatte mit der Bildauswerteelektronik kann dabei besonders platzsparend im Wesentlichen parallel zur Windschutzscheibe im Fahrzeuginnenraum angeordnet werden. Das optische Modul ist mit der Leiterplatte elektrisch verbunden und bevorzugt in einem gemeinsamen Gehäuse angeordnet.

Die erfindungsgemäße Vorrichtung umfasst wenigstens ein optisches Modul, das zur Erfassung von elektromagnetischer Strahlung dient. Das optische Modul umfasst dabei wenigstens ein Abbildungssystem und wenigstens ein Bildaufnahmeelement.

Bei dem Abbildungssystem handelt es sich vorzugsweise um ein Objektiv, das eine oder mehrere Linsen sowie andere optische Strahlformungs-/Strahllenkungselemente aufweisen kann. Das Abbildungssystem dient insbesondere zur Projektion von elektromagnetischer Strahlung, insbesondere von elektromagnetischer Strahlung aus einem vor einem Fahrzeug liegenden Umgebungsbereich, auf das Bildaufnahmeelement bzw. in eine hinter dem Abbildungssystem liegende Bildebene. Bei der elektromagnetischen Strahlung handelt es sich vorzugsweise um elektromagnetische Strahlung im sichtbaren Spektralbereich und/oder um elektromagnetische Strahlung im Infrarot- und/oder im Ultraviolettbereich.

Bei dem Bildaufnahmeelement handelt es sich vorzugsweise um einen lichtempfindlichen Halbleiterbildsensor, beispielsweise ein CCD- oder CMOS-Bildsensor, mit einer für elektromagnetische Strahlung sensitiven Fläche. Das Bildaufnahmeelement dient insbesondere zur Erfassung der mittels des Abbildungssystems projizierten elektromagnetischen Strahlung und zur Erzeugung und/oder Ausgabe von elektrischen Signalen in Abhängigkeit der erfassten elektromagnetischen Strahlung.

Insbesondere bei Ausgestaltung des Abbildungssystems als Objektiv, welches in der Regel eine oder mehrere Linsen umfasst die als Linsenstapel in einem Objektivgehäuse angeordnet sind, können das Abbildungssystem und das Bildaufnahmeelement mit einem gemeinsamen Gehäuse ausgebildet sein, beispielsweise indem das Bildaufnahmeelement in das Objektivgehäuse integriert ist.
Die optische Vorrichtung umfasst weiterhin wenigstens eine Leiterplatte, auf welcher Bildauswerteelektronik angeordnet ist.
Bei der Bildauswerteelektronik handelt es sich vorzugsweise um elektronische Einrichtungen, die zur Auswertung der mittels des optischen Moduls erfassten elektromagnetischen Strahlung bzw. der mittels des Bildaufnahmeelements erzeugten elektrischen Signale dienen. Bei den elektronischen Einrichtungen handelt es sich beispielweise um elektrische Schaltungen und Mikroprozessoren zur Durchführung von Bildverarbeitungsalgorithmen.

Die Leiterplatte, auf der die Bildauswertelektronik angeordnet ist, ist insbesondere mit dem Bildaufnahmeelement elektrisch verbunden. Die elektrische Verbindung erfolgt dabei vorzugsweise über flexible Kabel bzw. Bandkontakte. Bei der Leiterplatte, kann es sich beispielsweise um eine PCB-Leiterplatte (Printed Circuit Board) handeln.

Die Leiterplatte, auf der die Bildauswerteelektronik angeordnet ist, ist erfindungsgemäß mit wenigstens einer Aussparung ausgestaltet, insbesondere mit einer runden oder eckigen Aussparung bzw. mit einer Aussparung in Form eines Loches bzw. eines Durchbruches innerhalb der Leiterplatte.

Die Leiterplatte ist parallel zur Windschutzscheibe im Innenraum des Fahrzeugs angeordnet, insbesondere direkt bzw. in geringem Abstand hinter der Windschutzscheibe. Mit einer parallelen Anordnung zur bzw. hinter der Windschutzscheibe ist dabei eine exakt parallele Anordnung der Leiterplatte zur Windschutzscheibe gemeint, wobei auch eine gewisse Abweichung von einer parallelen Ausrichtung möglich ist, beispielsweise eine Winkelabweichung um +/-10°. Die Abweichung von der parallelen Anordnung kann beispielsweise aufgrund von unterschiedlichen Neigungswinkeln von Fahrzeugscheiben bzw. der Windschutzscheiben, hinter denen die optische Vorrichtung angeordnet sein kann, erforderlich sein. Die Scheibenneigungen von Windschutzscheiben, insbesondere im oberen Teil der Scheiben, können sich im Bereich von 20° bis 35° bewegen und damit eine Anpassung der erfindungsgemäßen optischen Vorrichtung erforderlich machen.

Erfindungsgemäß ist das optische Modul der optischen Vorrichtung derart angeordnet, dass das optische Modul die elektromagnetische Strahlung durch die zumindest eine Aussparung der Leiterplatte hindurch erfasst, d.h. das optische Modul ist mit Blickrichtung auf die Fahrzeugscheibe bzw. in einen vor dem Fahrzeug befindlichen Umgebungsbereich ausgerichtet und blickt durch die Leiterplatte hindurch. Die in das optische Modul bzw. in das Abbildungssystem einfallende elektromagnetische Strahlung fällt dabei durch die Aussparung in der Leiterplatte.

In einer besonderen Ausgestaltung der erfindungsgemäßen optischen Vorrichtung ist das optische Modul derart angeordnet, dass das optische Modul teilweise in die zumindest eine Aussparung der wenigstens einen Leiterplatte hinein bzw. hindurch ragt. In diesem Fall kann die Leiterplatte beispielsweise in einem geringen Abstand hinter Windschutzscheibe angeordnet sein und das optische Modul ist aus Richtung des Fahrzeuginnenraums teilweise durch die zumindest eine Aussparung der Leiterplatte in Richtung der Windschutzscheibe hindurch geschoben angeordnet.

In einer bevorzugten Ausgestaltung der erfindungsgemäßen optischen Vorrichtung ist die Leiterplatte mit der Bildauswerteelektronik exakt parallel zur Windschutzscheibe ausgerichtet und insbesondere in einem möglichst geringen Abstand im Fahrzeuginnenraum hinter der Windschutzscheibe angeordnet, z.B. mit zwischen der Windschutzscheibe und der Leiterplatte befindlichen Gehäuseelementen und/oder Haltevorrichtungen.

In einer weiteren bevorzugten Ausgestaltung der erfindungsgemäßen optischen Vorrichtung umfasst die optische Vorrichtung wenigstens ein Gehäuse, in dem insbesondere die Leiterplatte, auf welcher die Bildauswerteelektronik angeordnet ist, und das optische Modul angeordnet sind. Das Gehäuse kann in dem Fall direkt an der Windschutzscheibe befestigt sein, beispielsweise über eine Klebeverbindung und/oder über eine hierfür ausgebildete und an der Windschutzscheibe befestigte Haltevorrichtung. In einer vorteilhaften Ausgestaltung der erfindungsgemäßen optischen Vorrichtung ist das optische Modul über eine verstellbare Haltevorrichtung mit dem Gehäuse der optischen

Vorrichtung verbunden bzw. in dem Gehäuse angeordnet. Bei der verstellbaren Haltevorrichtung handelt es sich beispielsweise um eine mechanische verstellbare Haltevorrichtung. Die Haltevorrichtung ist dabei vorzugsweise derart ausgebildet, dass über die Haltevorrichtung ein Erfassungswinkel des optischen Moduls einstellbar ist. Unter dem Erfassungswinkel ist dabei insbesondere der Winkel der optischen Achse des optischen Moduls zum Horizont bzw. zu einer horizontalen Ausrichtung zu verstehen. Das Einstellen des Erfassungswinkels dient dabei beispielsweise zur Veränderung des Beobachtungsbereichs des optische Moduls bzw. der optischen Vorrichtung und/oder zur Anpassung der optischen Vorrichtung an den Neigungswinkel der Windschutzscheibe, hinter der die optische Vorrichtung angeordnet ist.
Bei dieser Ausgestaltung der erfindungsgemäßen optischen Vorrichtung kann die optische Vorrichtung hinter einer Windschutzscheibe angeordnet werden, wobei auf einfache Weise die Vorrichtung an die jeweiligen Einbaubedingungen und/oder an die jeweilige Scheibenneigung angepasst werden kann. Auf eine besondere Ausgestaltung der optischen Vorrichtung für unterschiedliche Fahrzeugtypen bzw. Einbausituationen kann somit vorzugsweise verzichten werden und es ergibt sich eine besonders vielseitige Einsatzmöglichkeit der optischen Vorrichtung.
Die erfindungsgemäße optische Vorrichtung ist bevorzugt in einer Kamera für ein Fahrzeug angeordnet.

Weitere Vorteile sowie optionale Ausgestaltungen gehen aus der Beschreibung und den Zeichnungen hervor. Ausführungsbeispiele sind in den Zeichnungen vereinfacht dargestellt und in der nachfolgenden Beschreibung näher erläutert.

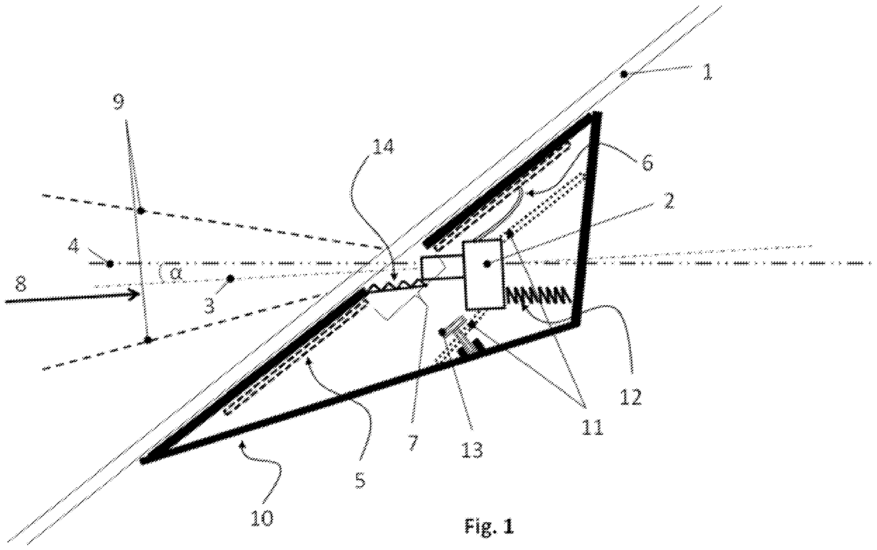

Fig. 1 zeigt eine schematische Darstellung einer bevorzugten Ausgestaltung der erfindungsgemäßen optischen Vorrichtung in einer Seitenansicht. Die optische Vorrichtung ist hinter der Windschutzscheibe 1 eines Fahrzeugs angeordnet und umfasst ein optisches Modul 2, welches ein Abbildungssystem und ein Bildaufnahmeelement umfasst, die in einem gemeinsamen Gehäuse angeordnet sind. Die optische Achse 3 des optischen Moduls 2 ist im Wesentlichen horizontal ausgerichtet, wobei im Wesentlichen horizontal in diesem Fall einen Neigungswinkel α im Bereich von +/- 45° zur exakt horizontalen Ausrichtung 4 einschließt. Die optische Vorrichtung umfasst weiterhin eine Leiterplatte 5, auf welcher Bildauswerteelektronik (nicht dargestellt) angeordnet ist. Die Leiterplatte 5, auf der die Bildauswertelektronik angeordnet ist, ist mit dem Bildaufnahmeelement elektrisch verbunden. Die elektrische Verbindung erfolgt in diesem Fall über flexible Kabel 6, die zwischen dem optischen Modul 2 und der Leiterplatte 5 angeordnet sind. Die Kabel 6 können innerhalb des optischen Moduls 2 beispielsweise mit einer Leiterplatte, auf der das Bildaufnahmeelement angeordnet ist, verbunden sein.
Die Leiterplatte 5, auf der die Bildauswerteelektronik angeordnet ist, ist erfindungsgemäß mit wenigstens einer Aussparung 7 ausgestaltet, in diesem Fall mit einer Aussparung 7 in Form eines Loches bzw. Durchbruches innerhalb der Leiterplatte 5.
Die Leiterplatte 5 ist weiterhin parallel zur Windschutzscheibe 1 und in diesem Fall in geringem Abstand hinter Windschutzscheibe 1 angeordnet.

Erfindungsgemäß ist das optische Modul 2 der optischen Vorrichtung derart angeordnet, dass das optische Modul 2 die elektromagnetische Strahlung 8 durch die zumindest eines Aussparung 7 der Leiterplatte 5 hindurch erfasst, d.h. das optische Modul 2 ist mit Beobachtungsrichtung bzw. mit seinem Beobachtungsbereich 9 auf die Fahrzeugscheibe 1 und/oder in einen vor dem Fahrzeug befindlichen Umgebungsbereich ausgerichtet. Die in das optische Modul 2 bzw. in das Abbildungssystem des optischen Moduls 2 einfallende elektromagnetische Strahlung 8 fällt dabei durch die Aussparung 7 der Leiterplatte 5 hindurch.
Die optische Vorrichtung, entsprechend Fig. 1, umfasst weiterhin ein Gehäuse 10, in dem die Leiterplatte 5 und das optische Modul 2 angeordnet sind. Das Gehäuse 10 ist in diesem Fall direkt an der Windschutzscheibe 1 befestigt, beispielsweise über eine Klebeverbindung.
Das optische Modul 2 ist im Beispiel aus Fig. 1 über eine verstellbare Haltevorrichtung mit dem Gehäuse 10 der optischen Vorrichtung verbunden bzw. in dem Gehäuse 10 angeordnet. Bei der verstellbaren Haltevorrichtung handelt es sich in diesem Fall um eine mechanische verstellbare Haltevorrichtung, umfassend Verbindungselemente 11 zwischen optischen Modul 2 und Gehäuse 10 sowie eine Feder 12 und eine Verstellschraube 13. Die Haltevorrichtung ist dabei insbesondere derart ausgebildet, dass über die Verstellschraube 13 der Haltevorrichtung der Erfassungswinkel α des optischen Moduls 2 einstellbar ist. Das Einstellen des Erfassungswinkels α dient dabei beispielsweise zur Veränderung des Beobachtungsbereichs 9 des optische Moduls 2 bzw. der optischen Vorrichtung und/oder zur Anpassung der optischen Vorrichtung an den Neigungswinkel der Windschutzscheibe 1.
Als weiteres Bauelement ist in der optischen Vorrichtung aus Fig. 1 zwischen dem optischen Modul 2 und dem Gehäuse 10 eine Streulichtblende 14 angeordnet.

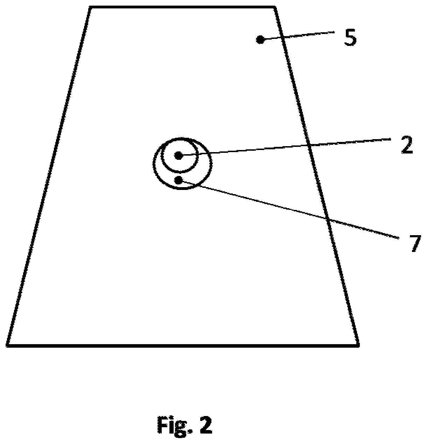

In Fig. 2 ist beispielhaft eine erfindungsgemäße optische Vorrichtung dargestellt, aus der Perspektive der in das optische Modul 2 der optischen Vorrichtung einfallenden elektromagnetischen Strahlung 8. Fig. 2 zeigt dabei die Leiterplatte 5, die in diesem Fall mit einer runden Aussparung 7 ausgestaltet ist. Das optische Modul 2 ist hinter der Leiterplatte 5 angeordnet sowie erfindungsgemäß derart, dass es durch die Aussparung 7 der Leiterplatte 5 hindurch blickt bzw. die elektromagnetische Strahlung 8 (in Fig. 2 nicht dargestellt) durch die Aussparung 7 hindurch erfasst. Die optische Vorrichtung aus Fig. 2 kann beispielsweise, wie in Fig. 1 dargestellt, ein Gehäuse 10 umfassen und direkt hinter der Windschutzscheibe 1 eines Fahrzeugs angeordnet sein, insbesondere derart, dass die Leiterplatte 5 im Wesentlichen parallel zur Windschutzscheibe 1 ausgerichtet ist.

Die optischen Vorrichtungen aus Fig. 1 und Fig. 2 können erfindungsgemäß als Fahrzeugkameras ausgestaltet sein und weitere Elemente umfassen, wie beispielsweise Halte- bzw. Befestigungsvorrichtungen sowie elektrische Verbindungselemente zu weiteren elektronischen Einrichtungen im Fahrzeug. Die optischen Vorrichtungen sowie deren Bestandteile können zudem auch mehrteilig ausgestaltet sein und andere Formen und Ausgestaltungen annehmen, als in den Figuren 1 und 2 dargestellt.

### Bezeichnungsliste

- 1: Windschutzscheibe
- 2: optisches Modul
- 3: optische Achse
- 4: horizontale Ausrichtung
- 5: Leiterplatte
- 6: elektrische Verbindung
- 7: Aussparung
- 8: elektromagnetische Strahlung
- 9: Beobachtungsbereich
- 10: Gehäuse
- 11: Verbindungselemente
- 12: Feder
- 13: Verstellschraube
- 14: Streulichtblende
- α: Erfassungswinkel

## Patentansprüche

1. **Optische Vorrichtung** für ein Fahrzeug, die im Fahrzeuginnenraum hinter der Windschutzscheibe (1) angeordnet ist, umfassend
- wenigstens ein optisches Modul (2), zur Erfassung von elektromagnetischer Strahlung (8), umfassend
- ein Abbildungssystem, zur Projektion der elektromagnetischen Strahlung (8), und
- ein Bildaufnahmeelement mit einer für elektromagnetische Strahlung sensitiven Fläche, zur Erfassung der von dem Abbildungssystem projizierten elektromagnetischen Strahlung,
sowie
- wenigstens eine Leiterplatte (5), auf der Bildauswerteelektronik angeordnet ist und die mit dem wenigstens einen optischen Modul (2) elektrisch verbunden ist, wobei
die wenigstens eine Leiterplatte (5) im Wesentlichen parallel zur Windschutzscheibe (1) angeordnet ist, **dadurch gekennzeichnet, dass**
- die wenigstens eine Leiterplatte (5)
mit zumindest einer Aussparung (7) ausgebildet ist, und
- das optische Modul (2) derart angeordnet ist, dass das optische Modul (2) die elektromagnetische Strahlung (8) durch die zumindest eine Aussparung (7) hindurch erfasst.

2. Optische Vorrichtung nach Anspruch 1, **dadurch gekennzeichnet, dass** das optische Modul (2) derart angeordnet ist, dass das optische Modul (2) teilweise in die zumindest eine Aussparung (7) der wenigstens einen Leiterplatte (5) hineinragt.

3. Optische Vorrichtung nach Anspruch 1 oder 2, **dadurch gekennzeichnet, dass**
die optische Vorrichtung ein Gehäuse (10) umfasst, in dem die wenigstens eine Leiterplatte (5) und das wenigstens eine optische Modul (2) angeordnet sind.

4. Optische Vorrichtung nach Anspruch 3, **dadurch gekennzeichnet, dass** das optische Modul (2) über eine verstellbare Halterung (11;12;13) mit dem Gehäuse (10) verbunden ist, derart, dass ein Erfassungswinkel (α) des optischen Moduls (2) mittels der verstellbaren Halterung (11;12;13) veränderbar ist.

5. Kamera für ein Fahrzeug, die eine optische Vorrichtung nach einem der vorangegangenen Ansprüche umfasst.

6. Fahrzeug, in dem eine optische Vorrichtung nach einem der Ansprüche 1 bis 4 oder eine Kamera nach Anspruch 5 angeordnet ist.

## Claims

1. An optical device for a vehicle, which is arranged in the vehicle interior behind the windscreen (1), comprising
- at least one optical module (2) for detecting electromagnetic radiation (8), comprising
- an imaging system for projecting the electromagnetic radiation (8), and
- an image capture element with a surface sensitive to electromagnetic radiation, for detecting the electromagnetic radiation projected by the imaging system,
and
- at least one printed circuit board (5), on which the image analysis electronics are arranged and which is connected electrically to the at least one optical module (2),
the at least one printed circuit board (5) being arranged substantially parallel to the windscreen (1), **characterized in that**
- the at least one printed circuit board (5) is configured with at least one opening (7), and
- the optical module (2) is arranged such that the optical module (2) detects the electromagnetic radiation (8) through the at least one opening (7).

2. The optical device according to Claim 1, **characterized in that** the optical module (2) is arranged such that the optical module (2) protrudes in part into the at least one opening (7) of the at least one printed circuit board (5).

3. The optical device according to either one of Claims 1 or 2, **characterized in that**
the optical device comprises a housing (10) in which the at least one printed circuit board (5) and the at least one optical module (2) are arranged.

4. The optical device according to Claim 3, **characterized in that** the optical module (2) is connected to the housing (10) via an adjustable support (11;12;13), such that an angle of detection (α) of the optical module (2) is variable by means of the adjustable support (11;12;13).

5. A camera for a vehicle, comprising an optical device according to any one of the preceding claims.

6. A vehicle in which an optical device according to any one of Claims 1 to 4 or a camera according to Claim 5 is arranged.

## Revendications

1. Dispositif optique pour un véhicule, lequel est disposé dans un habitacle de véhicule derrière le pare-brise (1), comprenant
- au moins un module optique (2) pour la détection de rayonnement électromagnétique (8), comprenant
- un système d'imagerie pour la projection du rayonnement électromagnétique (8) et
- un élément d'enregistrement d'image avec une surface sensible aux rayonnements électromagnétiques pour la détection du rayonnement électromagnétique projeté par le système d'imagerie,
ainsi qu'
- au moins un circuit imprimé (5) sur lequel l'électronique d'analyse d'image est disposée et lequel est relié électriquement à l'au moins un module optique (2),
l'au moins un circuit imprimé (5) étant disposé de façon essentiellement parallèle au pare-brise (1),
**caractérisé en ce que**
- l'au moins un circuit imprimé (5) est formé avec au moins un évidement (7), et
- le module optique (2) est disposé de telle sorte que le module optique (2) capte le rayonnement électromagnétique (8) à travers l'au moins un évidement (7) .

2. Dispositif optique selon la revendication 1, **caractérisé en ce que** le module optique (2) est disposé de telle sorte que le module optique (2) s'engage partiellement dans l'au moins un évidement (7) de l'au moins un circuit imprimé (5) .

3. Dispositif optique selon la revendication 1 ou 2, **caractérisé en ce que**
le dispositif optique comprend un boîtier (10), dans lequel l'au moins un circuit imprimé (5) et l'au moins un module optique (2) sont disposés.

4. Dispositif optique selon la revendication 3, **caractérisé en ce que** le module optique (2) est relié par un support réglable (11 ; 12 ; 13) au boîtier (10) de telle sorte qu'un angle de détection (α) du module optique (2) peut être modifié au moyen du support réglable (11 ; 12 ; 13).

5. Caméra pour un véhicule comprenant un dispositif optique selon l'une quelconque des revendications précédentes.

6. Véhicule dans lequel est disposé(e) un dispositif optique selon l'une des revendications 1 à 4 ou une caméra selon la revendication 5.
